# EUROPEAN PATENT APPLICATION

(11) **EP 1 652 657 A1**
(43) Date of publication of application: **03.05.2006**
(21) Application number: 05256681.7
(22) Date of filing: 27.10.2005
(51) Int. Cl.: B29C 73/02, B32B 17/10

(54) **Windscreen repair tools**

(30) Priority: 27.10.2004 GB 0423930
(71) Applicant: Wellard, John, Staffordshire ST5 7RH (GB)
(72) Inventor: Wellard, John, West Sussex RH20 2HE (GB); Satherley, Richard, East Grinstead, West Sussex RH19 2RB (GB)
(74) Representative: Samuels, Adrian James

(57) **Abstract**

A tool (1) for mounting an injector (10) comprises a base portion (3) adapted for mounting on a windscreen and a head portion (5) for supporting the injector (10), the head portion (5) being connected to the base portion (3) by an inherently resilient arm (6) which is arranged in use to be deflected as the base portion (3) is mounted to a windscreen thereby to bias the injector (10) resiliently against the windscreen. The head portion (5) is adapted in use to tilt preferentially in one direction relative to the base portion (3). The head portion (5) is supported by three legs (18), one of the legs (20) being longer than the other two.

## Description

This invention relates to windscreen repair tools particularly, but not exclusively, those for mounting injectors for injecting repair material into breaks in laminated glass windscreens.

It is well known in the art to use a support tool or bridge to hold an injector of repair material in position over a break in a chipped windscreen so that liquid repair material can be injected to fill and seal the break. The repair material is usually a UV-curable, optically matched resin. The injector must apply the necessary vacuum and pressure so that all air is removed as the break is filled with resin. The tool must therefore hold the injector so as to permit a good seal against the windscreen surface so that the resin may be injected under pressure directly into the break without leaking or admitting air.

There have been several previous proposals for such tools. A simple known tool comprises a suction cup for attachment to the surface of a windscreen and an arm for holding the injector, as shown in EP 0117697. The arm may be rotated about the suction cup, to locate the injector over the break, and then clamped into position.

The tools shown in US 4291866 and EP 0296671 house a suction cup in a tripod body to provide more stability. The injector is supported in a tripod head at the end of a rigid arm which may be rotated relative to the body. The injector is held against a windscreen surface by applying a bias force to the rigid arm by means of a screw thread. As the arm is rigid, it is not possible to maintain pressure on the arm at right angles to a curved surface. The known tools tend to be heavy and to include sharp edges which present an increased risk of damage if dropped onto a car. The number of parts required makes manufacture relatively expensive also.

The known tools suffer from the problem that as resin is injected into a break the surface seal of the injector expands, causing the tripod head supporting the injector to lift up from the surface. Once the three legs of the tripod move off the glass there is no support for the injector at all, so that if the injector is knocked the seal will be lost. There is a significant tendency for the surface seal to blow out under the injection pressure.

It is an object of the present invention to alleviate the problems set out above.

When viewed from a first aspect the invention provides a tool for mounting an injector comprising a base portion adapted for mounting on a windscreen and a head portion for supporting an injector, the head portion being connected to the base portion by an inherently resilient arm which is arranged in use to be deflected as the base portion is mounted to a windscreen thereby to bias the injector resiliently against the windscreen.

Thus it will be appreciated by those skilled in the art that in accordance with the present invention a mounting tool has an inherently resilient arm whose deflection as the tool is mounted to the windscreen biases the injector resiliently against the windscreen automatically. The tool therefore has the advantage that even when the surface seal of the injector expands under pressure, the injector is held firmly against the windscreen surface.

It will also be appreciated that tools in accordance with the invention may be easier and quicker to use because the arm is already primed, by virtue of its inherent resilience, to bias an injector against the windscreen when the tool is mounted to it, without the need to bias the arm by means of a screw thread or the like. The tool therefore requires fewer parts than known arrangements.

The arm may be made of any stiff material which has the required degree of inherent resilience such as a suitable plastics or composite material, but preferably it is made of spring steel. The spring steel arm may be uncoated, but preferably it is coated or plated, e.g. with chrome, to improve its appearance and/or corrosion resistance. Preferably the arm is formed as a single, preferably planar, piece. This helps to maximise its strength by minimising zones such as bends or joins where stress could concentrate. In preferred embodiments a cut-out is formed in the arm in order to control its stiffness and so the resilient force which the arm applies to bias the injector.

The base portion may be mounted to the windscreen by any suitable means e.g. one or more adhesive pads or other suitable connectors, but preferably the base portion is provided with at least one suction cup. Most preferably the base portion has a single centrally-located suction cup to make the base as compact as possible. The suction cup may be arranged to be manually pressed down e.g. with a tab or handle to assist in removing it, but preferably a lever is provided for applying and releasing it. In preferred embodiments the lever is mounted to a spring on a cam which converts the motion of the lever into a compression of the spring for applying and releasing the suction cup. In this arrangement the base portion may be both mounted to and released from a windscreen in a quick and easy manner by a simple operation of the lever.

Preferably the lever is recessed into the base portion at least in its operational position, i.e. when the base portion is mounted on a windscreen. Thus the lever is neatly stored in a recess in use so that there are no protruding parts which may interfere with operation of the windscreen repair tool, or which may cause damage to a car if the tool were to become inadvertently loosened from its mounted position and allowed to fall from the windscreen.

Preferably the base portion has feet on which it rests on the windscreen in use. Most preferably it has three feet spaced around its perimeter. In such an arrangement all three feet will bear firmly on the windscreen surface, even if it is slightly curved, so that the base portion can be mounted stably and tangentially to the surface.

The base portion may be of any suitable shape, however it preferably has a curved surface and more preferably a part-spherical outer surface. If the base portion has no corners or sharp edges, it is less likely to scratch the paintwork or cause damage if the tool is dropped onto the bonnet of a car.

The arm must be connected to the base portion firmly enough to allow it to apply a sufficient force to the injector to maintain a good seal. It could for example be fixed to or integral with the base portion. Preferably though the arm has at least one degree of freedom of movement relative to the base portion. This allows the head portion to be positioned over a break in the windscreen and to be moved away to inspect the repair, while the base portion remains mounted on the windscreen. The arm could be hingedly or slidingly attached to the base portion but in preferred embodiments it is mounted to the base portion so as to be laterally rotatable. This means that it does not necessarily have to be locked against the biassing force applied by the arm since its freedom of movement is orthogonal to the biassing force.

The head portion could be designed so as not directly to contact the windscreen such that in use only the head of the injector contacts the windscreen. This would maximise the sealing force on the injector, but is not considered ideal as the relatively small diameter of a typical injector head would make such an arrangement unstable. It is therefore preferred that at least part of the head portion is arranged to bear on the windscreen. Preferably the head portion comprises a tripod arrangement. This gives a stable engagement regardless of the curve of the surface as explained above in respect of the base.

The head portion may be integral with the arm but preferably it is separate. More preferably the head portion is received in an aperture at the distal end of the arm. The head portion may be tightly received in the aperture but preferably it is allowed some degree of movement. This will allow it to self-level, particularly where it is provided with a tripod arrangement.

The head portion could be free to tilt relative to the arm in any direction in the manner of a universal joint. In preferred embodiments however the head portion is arranged preferentially to tilt in one direction relative to the arm. For example where the head portion is received in an aperture the head portion and aperture could be cooperatively formed so that the head portion preferentially tilts in one direction. This allows some self-levelling without allowing the head to be too unstable.

This feature is considered to be novel and inventive in its own right. Thus when viewed from a second aspect the present invention provides a windscreen repair tool for mounting an injector comprising a base portion for mounting on a windscreen and a head portion, the head portion being adapted in use to tilt preferentially in one direction relative to the base portion.

Preferably the head portion is connected to the base portion by an arm. Most preferably the arm is inherently resilient as in the first aspect of the invention.

Preferably the head portion tilts preferentially in the direction of the axis of the arm, i.e. the head portion may tilt back and forth towards and away from the base portion. This means that the angle of the head portion will adjust itself automatically to support an injector substantially perpendicular to the windscreen and can transmit a biassing force on the injector in a direction substantially perpendicular to the windscreen. This is particularly advantageous when the windscreen surface is curved along the axis of the tool so that the base portion is not mounted on the same level as the windscreen surface directly beneath the supported injector.

The head portion of the second aspect of the invention may be integral with the base portion, however it is preferred that the head portion is a separate piece received in an aperture e.g. at the distal end of the connecting arm where provided.

In preferred embodiments the head portion is arranged to tilt preferentially along the direction of the axis of the arm by virtue of a cooperation between the head portion and the arm. This cooperation may comprise a tongue and groove arrangement however it is preferable that the surface of the head portion defines a cam. In preferred embodiments a cam surface of the head portion is received in an aperture in the arm such that movement of the arm in a direction perpendicular to its axis is transmitted to the head portion as a tilting movement along the direction of the axis of the arm. It will therefore be appreciated by those skilled in the art that as the resilient arm flexes relative to the base portion the angle of tilt of the head portion will change.

The head portion is preferably provided with three legs with which to bear on the windscreen.

According to a preferred set of embodiments the head portion is so shaped as to bear on the windscreen such that its central axis is at an angle to the normal to the windscreen. In preferred embodiments in which the head portion has a tripod arrangement this is preferably achieved by having one leg longer than the other two. The advantage of this arrangement is that, in use, as the injector is biased against the windscreen surface with increasing force, the head tilts from its initial acute angle towards the perpendicular to the windscreen surface. The injector mounted parallel to the axis of the head portion will thus tilt towards the perpendicular too. This contrasts with known arrangements in which the application of the sealing force tends to tilt the injector off the perpendicular, which gives rise to a tendency for the seal to blow out as the applied force is increased.

This arrangement is novel and inventive in its own right. Therefore when viewed from a third aspect the invention provides a windscreen repair tool for mounting an injector comprising a base portion for mounting on a windscreen and a head portion, the head portion being so shaped as in use to bear on the windscreen such that its central axis is at an angle to the normal to the windscreen.

The invention also extends to a head for supporting a windscreen repair injector, the head being so shaped as in use to bear on a windscreen such that its central axis is at an angle to the normal to the windscreen.

As above, preferably the head portion is supported by three legs, one of the legs being longer than the other two. Preferably the head portion is connected to the base portion by a preferably inherently resilient arm. It is preferable that the longer leg contacts the windscreen surface at a point substantially on the axis of the arm. This means that the head portion can be tilted to lift the other two legs off the surface, pivoted on the longer leg and rotated, with the arm, on this pivot to inspect the repair.

A handle may be provided on the arm, but preferably a handle or tab is provided on the head portion in order to facilitate tilting the head portion in use. In preferred embodiments the longer leg is arranged inwardly towards the base portion and the handle is provided outwardly from the base portion, both disposed substantially along the axis of the arm. It will be appreciated that the head portion is therefore easily tilted to pivot on the longer leg and rotated away from the break and back again, so that the repair can be quickly and easily inspected without the need to move the repair tool. Another benefit of the tilting of the head portion is that it may lift the surface seal of a supported injector off the windscreen surface so that the delicate seal is not dragged across the glass as the head portion is moved. This arrangement is especially suitable for embodiments in which the arm is rotatable laterally with respect to the body position as has been described hereinabove.

The head portion may support an injector by any suitable means such as a clip fastener, bayonet fitting, mating recess or, preferably, a threaded mounting. In preferred embodiments the head portion comprises removable attachment means for connecting the head portion to the arm. In a preferred embodiment the attachment means includes an inner threaded bore into which an injector can be screwed. The attachment means is preferably spaced from the arm by a compliant e.g. elastomeric or foam, member in order to accommodate a tilting movement of the head portion relative to the arm whilst the head portion remains substantially connected thereto. Thus the head portion and supported injector can be sufficiently well connected by the arm to be biased by the resilient force of the arm, yet the head portion has sufficient freedom to tilt the injector towards the perpendicular direction as described before.

A preferred embodiment of the present invention will now be described, by way of example only, with reference to the accompanying drawings in which:
Figure 1 is a section of a windscreen repair tool in accordance with the present invention supporting an injector prior to being mounted to a windscreen;
Figure 2 is a section of the tool of Figure 1 with the lever in its operational position for mounting the tool to a windscreen;
Figure 3 is a bottom plan view of the tool;
Figure 4 is an enlarged view of the head portion of the windscreen repair tool; and
Figure 5 is a schematic view of the aperture in the arm of the tool.

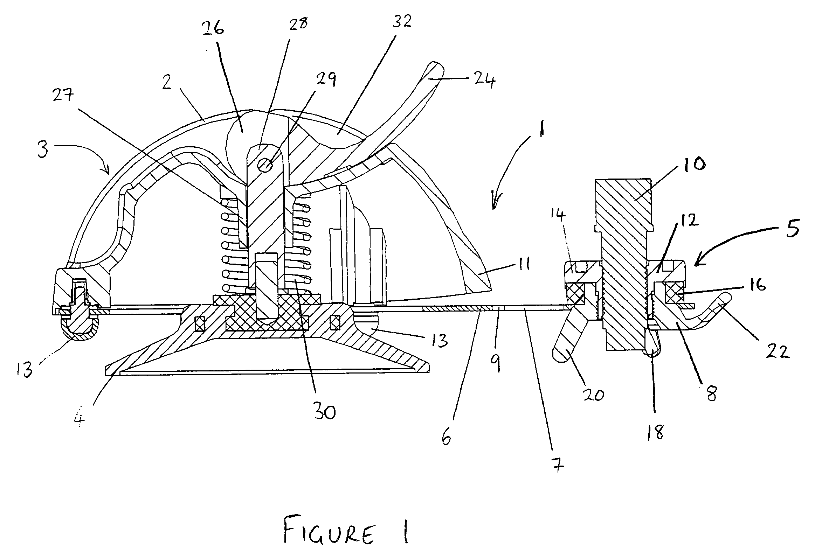

Figure 1 shows a windscreen repair tool 1 in accordance with the invention. It broadly comprises a base portion 3 on the left hand side of the Figure and a head portion 5 on the right hand side. The two are connected by an arm 6 described in greater detail below.

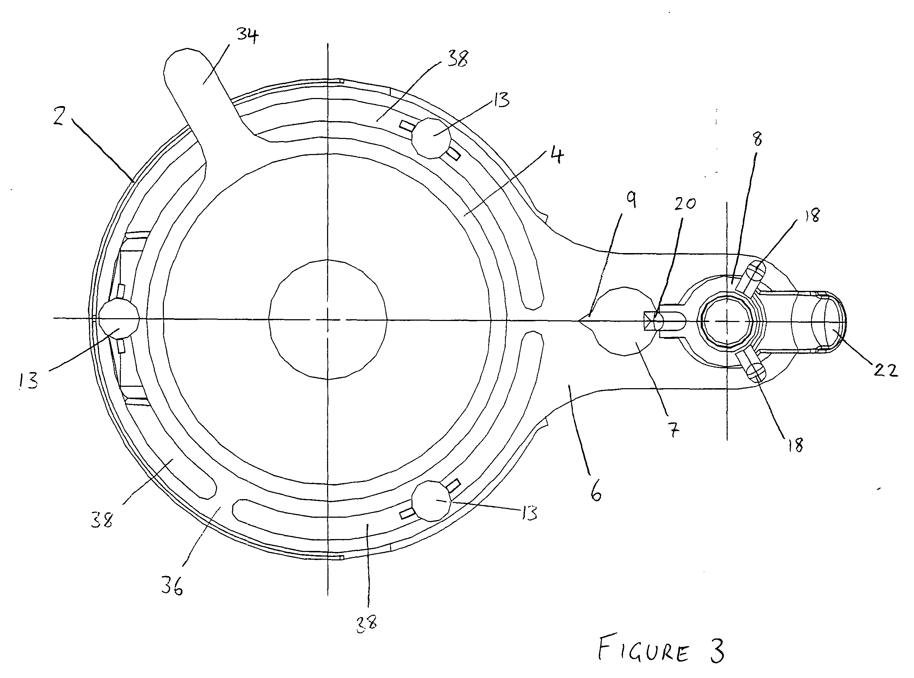

Considering first the base portion 3, this comprises a hemi-spherical shell 2 housing a centrally-located suction cup 4. The suction cup 4 is mounted on the end of a square shaft 28 which slides vertically within a sleeve 27. The cup 4 and shaft 28 are resiliently biased downwardly by a compression coil spring 30. The top of the shaft 28 is coupled eccentrically by a pin 29 to a cam portion 26 of a machined aluminium operating lever 24. This allows the shaft 28 to be translated vertically within the sleeve 27 by rotation of the lever 24. Thus by applying the suction cup 4 to a smooth surface such as a windscreen and rotating the lever 24, the suction cup 4 is pressed onto the surface to create a pressure differential inside the cup 4 which holds it and therefore the body portion 3 of the tool firmly against the windscreen. The suction cup 4 shown has a tab 34 (see Figure 3) to assist in releasing it, however the omission of such a tab would not affect operation of the tool as described below.

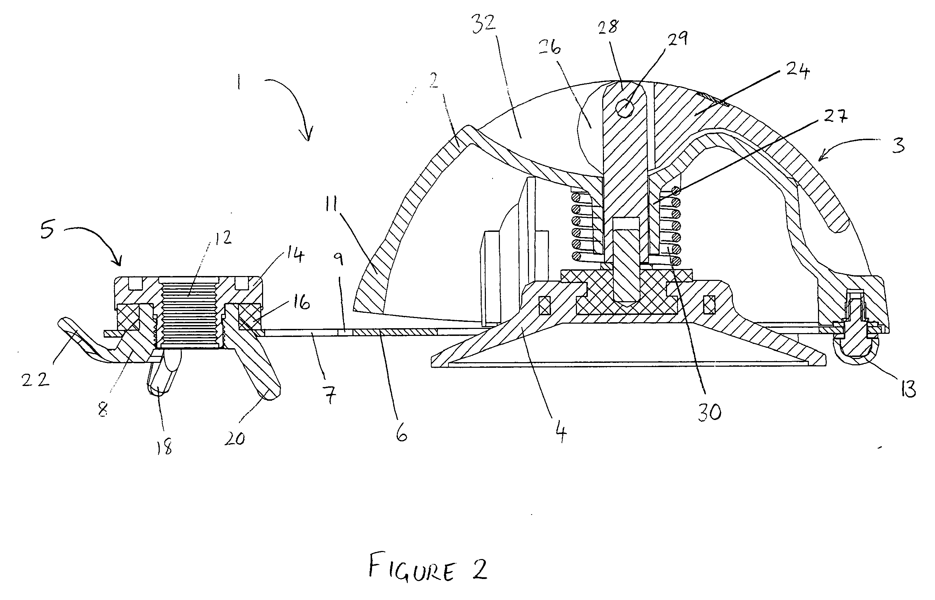

The lever 24 lies in a recess 32 in the top of the shell 2. In its operational position, as seen in Figure 2, the lever lies fully within the recess 32 flush with the hemispherical contour of the shell 2. The base portion 3 therefore constitutes a smooth unit when mounted on a windscreen with no protruding parts which could interfere with the operation of the tool, or which could cause damage to a car if the tool were to become loosened from its mouting and allowed to fall from the windscreen.

A flat spring steel arm 6 has an integral flat annulus 36 at its proximal end of the same diameter as the bottom of the shell 2. The annulus is provided with three circumferentially-spaced arcuate slots 38. Three rubber feet 13 protrude from the body portion 3 through the arcuate slots 38 in the arm 6 to attach the annulus 36 underneath the shell 2. The arm 6 is thus held underneath the shell 2 so as to be laterally rotatable to the extent defined by the arcuate slots 38, which amounts to rotation through an angle of about 240°.

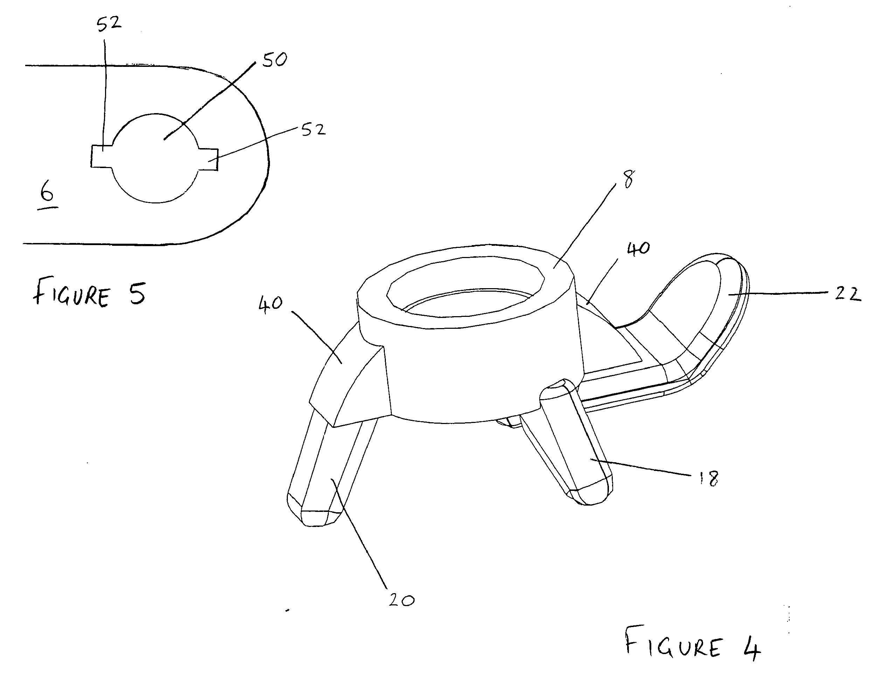

The arm 6 projects beyond the base portion 3 in a horizontal plane to connect the head portion 5 of the tool. The head portion 5 comprises a tripod head 8 in an aperture 50 at the distal end of the arm 6. The aperture 50 shown schematically in Figure 5 is generally circular with two diametrically opposed rectangular extensions 52 on the axis of the arm 6.

The spring steel arm 6 is provided with a cut-out 7 inbetween the head portion 5 and body portion 3 which locally reduces its width. The cut-out 7 is generally circular and has a pointer 9 which may be used to line up the arm 6 with a nose 11 on the shell 2 at the midpoint of the arm's travel. The size of the cut -out 7 is chosen according to the grade of spring steel used and the thickness of the arm 6 to control the stiffness of the arm 6.

The tripod head 8 has three legs: two short legs 18 and a longer leg 20. The latter is positioned so as to contact the windscreen at a point on the axis of the arm 6. The tripod head 8 has a tab 22 projecting past the distal end of the arm 6 and positioned opposite the longer leg 20. The tab 22 may be used to lift the head 8 thereby to rotate it about the longer leg 20.

A mounting collar 14 is screwed onto the top of the tripod head 8. An elastomeric retaining ring 16 surrounds the tripod head 8 and separates the mounting collar 14 from the arm 6. A repair resin injector 10 is screwed into an inner th readed bore 12 of the mounting collar 14.

As is seen most clearly in Figure 4, the tripod head 8 has two diametrically projecting curved cam surfaces 40 which are shaped so as to slot into the rectangular extensions 52 in the aperture 50 in the arm 6, such that the head 8 can tilt back and forth only along the direction of the axis of the arm 6. The tripod head 8 has its longer leg 20 and lifting tab 22 aligned along the same diameter. It will be appreciated that the tripod head 8 can tilt into a stable position with all three legs bearing on a windscreen surface by virtue of its cooperation with the arm 6 and that the central axis of the head 8 is then at an acute angle to the normal to the surface on which it rests by virtue of the longer leg 20. The injector 10 mounted parallel to the axis of the head 8 is thus also supported at an acute angle to the normal to the surface.

Operation of the windscreen repair tool will now be described. A user moves the lever 24 from its initial position, as shown in Figure 1, to its mounted position as shown in Figure 2 to cause the body portion 3 to become firmly attached to the windscreen via the three feet 13 of the body portion 3 which bear against the windscreen surface. The base portion 3 is thereby stably mounted to the windscreen even if it has a curved surface. Furthermore the base portion 3 can be mounted to and released from the windscreen in a quick and easy manner by a simple operation of the lever 24.

As the tool is mounted to a windscreen as described, the spring steel arm 6 is forced to flex upwards relative to the base portion 3 in the manner of a cantilever. This flexing movement of the arm 6 in a direction perpendicular to its axis is transmitted to the tripod head 8 as a tilting movement along the direction of the axis. The tilting of the head 8 and injector mounting attachment 14 relative to the arm 6 is accommodated by the elastomeric ring 16. The tripod head 8 is therefore able to level itself by tilting while the inherent resilience of the spring steel arm 6 automatically acts to bias the tripod head 8 and the injector 10 mounted therein against the windscreen. It will be appreciated by those skilled in the art that the tool is automatically primed ready for use and there is no need to adjust a mechanism to lock down the arm 6.

Once the tool is mounted, the injector 10 is positioned over a break in the windscreen by lateral rotation of the arm 6. This is achieved by using the lifting tab 22 to tilt the head 8 so that the two short legs 18 are lifted off the surface and the head 8 is pivoted on the longer leg 20. Tilting of the head 8 lifts the injector 10 away from the windscreen surface. The arm 6 may then be rotated by sliding on the long leg 20 to adjust the position of the head 8, without dragging the surface seal of the injector across the glass or smearing resin on the windscreen.

It will be appreciated by those skilled in the art that when the tab 22 is released the tripod head 8 tilts back down to rest with all three legs bearing on the surface and that the resilience of the arm 6 automatically biases the head 8 and injector 10 against the surface once again. Thus lateral movement of the arm 6 does not require it to be locked against its biassing force and repositioning of the injector 10 is therefore very quick and simple. This is important when inspecting the repair to check whether the injected resin has sufficiently filled the break, particularly when trying to fill the legs of a star break.

Once positioned over a break, the injector 10 is screwed further into the collar 14 against the windscreen surface, increasing the deflection of the arm 6 and thus the force with which it is biased onto the surface. This brings the axis of the head 8 and mounted injector 10 towards the normal to the surface, but still at a small acute angle. As resin is injected into the break the reaction force of the windscreen is counteracted by the resilient biassing force of the arm 6. As the arm 6 biases the injector 10 against the windscreen surface with increasing force, the head 8 tilts from its initial acute angle into a position perpendicular to the windscreen surface. The injector 10 mounted parallel to the axis of the head 8 thus tilts towards the perpendicular too. The injector head is therefore sealed more strongly against the surface as the applied force is increased so that the surface seal does not blow out.

It will be appreciated by those skilled in the art that the embodiments described above are only specific examples of how the principles of the invention may be implemented and there are many possible variants within the scope of the invention.

## Claims

1. A tool (1) for mounting an injector (10) comprising a base portion (3) adapted for mounting on a windscreen and a head portion (5) for supporting an injector (10), the head portion (5) being connected to the base portion (3) by an inherently resilient arm (6) which is arranged in use to be deflected as the base portion (3) is mounted to a windscreen thereby to bias the injector (10) resiliently against the windscreen.

2. A tool as claimed in claim 1 wherein said arm (6) is made of spring steel.

3. A tool as claimed in claim 1 or 2 wherein said arm (6) is formed as a single piece.

4. A tool as claimed in claim 1 or 2 wherein said arm (6) is substantially planar.

5. A tool as claimed in any preceding claim wherein the arm (6) has at least one degree of freedom of movement relative to the base portion (3).

6. A tool as claimed in any preceding claim wherein the arm (6) is mounted to the base portion (3) so as to be laterally rotatable.

7. A tool as claimed in any preceding claim wherein the head portion (5) comprises a tripod arrangement.

8. A tool as claimed in any preceding claim wherein the head portion (5) is received in an aperture at the distal end of the arm (6).

9. A tool as claimed in any preceding claim wherein the head portion (5) is arranged preferentially to tilt in one direction relative to the arm (6).

10. A windscreen repair tool for mounting an injector (10) comprising a base portion (3) for mounting on a windscreen and a head portion (5), the head portion (5) being adapted in use to tilt preferentially in one direction relative to the base portion (3).

11. A tool as claimed in claim 10 wherein the head portion (5) is connected to the base portion (3) by an inherently resilient arm (6) and the head portion (5) is received in an aperture at the distal end of the arm (6).

12. A tool as claimed in claim 9, 10 or 11 wherein the head portion (5) tilts preferentially in the direction of the axis of the arm (6).

13. A tool as claimed in any of claims 9 to 12 wherein the surface of the head portion (5) defines a cam.

14. A tool as claimed in any preceding claim wherein the head portion (5) is so shaped as to bear on the windscreen such that its central axis is at an angle to the normal to the windscreen.
